# EUROPEAN PATENT APPLICATION

(11) **EP 3 438 851 A1**
(43) Date of publication of application: **06.02.2019**
(21) Application number: 17773774.9
(22) Date of filing: 15.02.2017
(51) Int. Cl.: G06F 17/30

(54) **VEHICLE MODEL IDENTIFICATION DEVICE, VEHICLE MODEL IDENTIFICATION SYSTEM, AND VEHICLE MODEL IDENTIFICATION METHOD**

(30) Priority: 29.03.2016 JP 2016065192
(71) Applicant: Panasonic Intellectual Property Management Co., Ltd., Osaka-shi, Osaka 540-6207 (JP)
(72) Inventor: UETA Daisuke, Osaka-shi, Osaka 540-6207 (JP)
(74) Representative: Eisenführ Speiser
(86) International application number: PCT/JP2017/005488
(87) International publication number: WO 2017/169226

(57) **Abstract**

In order to provide a vehicle model identification device, a vehicle model identification system, and a vehicle model identification method capable of accurately extracting a target vehicle by narrowing down to a specific partial region, the vehicle model identification system includes an imaging device, a display device, a vehicle model identification device, and a bus that connects therebetween, and the vehicle model identification device includes an input device, a storage device, and a processor. A user performs a search with the input device, and the processor causes the display device to display a first vehicle image list, a vehicle image, and a reference image according to a first rule from the search condition. The user refers to the reference image, examines a feature of a target vehicle model, and specifies a partial region which is a feature. The processor acquires partial specification information of the specified partial region, searches for the target vehicle model based on a second rule, and displays a second vehicle image list and the vehicle image on the display device.

## Description

### TECHNICAL FIELD

The present disclosure relates to a vehicle model identification device, a vehicle model identification system, and a vehicle model identification method for identifying a vehicle based on a captured image obtained by imaging the vehicle with a camera or the like.

### BACKGROUND ART

A vehicle recognition device that processes a captured image of a vehicle captured by an imaging device such as a camera and identifies the name of the vehicle is known (see PTL 1).

PTL 1 discloses a vehicle recognition device that includes a feature amount extraction means for extracting a feature amount of the front grill of the vehicle from the captured image and a feature amount storage means for storing the feature amount of the front grill corresponding to each vehicle model of the vehicle, compare the feature amount of the feature amount extraction means and the feature amount of the feature amount storage means, and determine the name of the vehicle whose similarity is the maximum and exceeds a predetermined threshold is the vehicle name of the vehicle captured in the captured image.

### Citation List

### Patent Literature

PTL 1: Japanese Patent No. 5338255

### SUMMARY OF THE INVENTION

PTL 1 describes the extraction of a feature amount of the front grill including a relative positional relationship between a license plate of a vehicle, left and right headlamps, left and right fog lamps, a front spoiler, an emblem, and these outer shapes. However, when searching for a target vehicle model, determination is made based on the feature of the front grill in general, and therefore there is a problem that a lot of candidate images including images which are similar to the target vehicle model only for the front grill but are not similar to the target vehicle model for other parts are extracted and handling those images becomes difficult.

An object of the present disclosure is to provide a vehicle model identification device, a vehicle model identification system, and a vehicle model identification method capable of accurately extracting a target vehicle by narrowing down the images to specific partial regions.

The vehicle model identification device of the present disclosure is a device for identifying a model of a vehicle based on a vehicle image of the vehicle captured by an imaging device, the vehicle model identification device, including a processor and a storage device, in which the storage device records the vehicle image and a score indicating a probability that the vehicle in the vehicle image is a specific vehicle model and the processor acquires search condition including information for specifying a vehicle model, extracts a first vehicle image list that matches the search condition by using a first rule based on the search condition and the score, displays the first vehicle image list on a display device, acquires partial specification information that specifies at least a part of the vehicle image, generates a second rule based on the partial specification information, and extracts a second vehicle image list that matches the search condition by using the generated second rule based on the search condition and the score.

The vehicle model identification system according to the present disclosure includes a vehicle model identification device, an imaging device for imaging a vehicle, and a display device for displaying the vehicle image, the first vehicle image list, and the second vehicle image list.

A vehicle model identification method according to the present disclosure is a method for identifying a model of a vehicle based on a vehicle image of the vehicle captured by an imaging device including recording a vehicle image which is an image of a vehicle captured and a score indicating the probability that the vehicle in the vehicle image is a specific vehicle model, acquiring search condition that is information for specifying a vehicle model, extracting a first vehicle image list that matches the search condition by using a first rule based on the search condition and the score, displaying the first vehicle image list on a display device, acquiring partial specification information that specifies at least a part of the vehicle image, generating a second rule based on the partial specification information, and extracting a second vehicle image list that matches the search condition by using the generated second rule based on the search condition and the score.

According to the present disclosure, it is possible to reduce candidate vehicle images by narrowing down the search based on the second rule based on the partial specification information, thereby providing a vehicle model identification device, a vehicle model identification system, and a vehicle model identification method capable of improving search efficiency and facilitate early discovery of a target vehicle.

### BRIEF DESCRIPTION OF DRAWINGS

FIG. 1 is a block diagram of a vehicle model identification system according to an embodiment of the present disclosure.
FIG. 2 is a diagram showing a list table showing an example of a vehicle image DB relating to the vehicle model identification system of the present disclosure.
FIG. 3 is a diagram showing a list table showing an example of a score DB relating to the vehicle model identification system of the present disclosure.
FIG. 4 is a flowchart showing an example of a procedure of creating a vehicle image DB relating to the vehicle model identification system of the present disclosure.
FIG. 5A is a conceptual diagram showing an example of partial regions allocated by the vehicle model identification system of the present disclosure.
FIG. 5B is a conceptual diagram showing an example of partial regions allocated by the vehicle model identification system of the present disclosure.
FIG. 6 is a flowchart showing an example of a search procedure relating to the vehicle model identification system of the present disclosure.
FIG. 7 is a conceptual diagram showing an example of a list and vehicle images displayed according to a first rule of the vehicle model identification system of the present disclosure.
FIG. 8 is a conceptual diagram showing an example of reference images displayed in the vehicle model identification system of the present disclosure.
FIG. 9 is a conceptual diagram showing an example of a list and vehicle images displayed according to a second rule of the vehicle model identification system of the present disclosure.
FIG. 10A is a diagram showing an outline of a narrowing-down procedure and is a diagram of vehicle images corresponding to a first vehicle image list L1 similar to FIG. 7.
FIG. 10B is a diagram showing an outline of the narrowing-down procedure showing that a specific partial region corresponding to FIG. 5B is designated by a user and further narrowing search is performed.
FIG. 10C is a diagram showing an outline of the narrowing-down procedure and is a diagram showing a display of a narrowing search result corresponding to FIG. 9.

### DESCRIPTION OF EMBODIMENT

Hereinafter, an embodiment (hereinafter, referred to as "the present embodiment") in which a vehicle model identification device, a vehicle model identification system, and a vehicle model identification method according to the present disclosure are specifically disclosed will be described in detail with reference to drawings as appropriate. However, the detailed explanation may be omitted more than necessary. For example, there are cases where a detailed description of well-known matters and redundant description on substantially the same configuration may be omitted. This is for avoiding unnecessary redundancy of the following description and facilitating understanding by those skilled in the art. The accompanying drawings and the following description are provided to enable those skilled in the art to fully understand the present disclosure and are not intended to limit the claimed subject matters.

Hereinafter, a preferred embodiment for carrying out the present disclosure will be described in detail with reference to drawings.

### <Configuration>

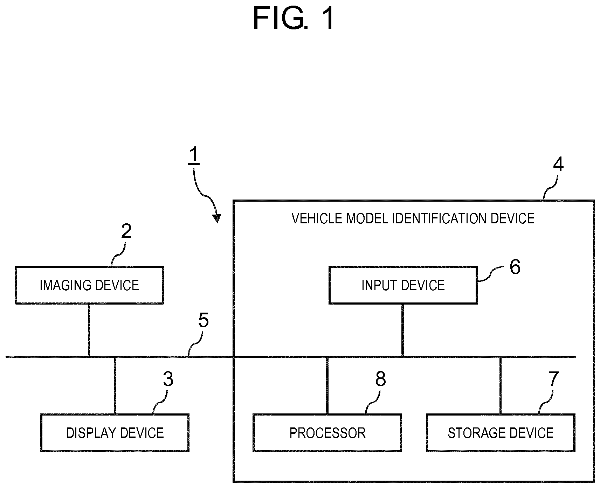

A configuration of an example of a vehicle model identification system will be described with reference to FIGS. 1 to 5.

FIG. 1 is a block diagram showing a hardware configuration for realizing the vehicle model identification system of the present disclosure.

The vehicle model identification device, the vehicle model identification system, and the vehicle model identification method according to the present disclosure are a device, a system and a method for identifying a target vehicle model by referring to a database in which a score indicating a probability that a vehicle in the image of the vehicle imaged by an imaging device is a specific vehicle model is recorded and accepting designation of a partial region of the vehicle by a user.

The vehicle described in the present disclosure mainly refers to ordinary vehicles specified by the traffic laws. The present disclosure may be widely applied to vehicles characterized by a front portion. A vehicle model is information for specifying the model of a vehicle. An example of the information indicating a model of vehicle is a model code. In addition, as the information indicating the model of a vehicle, it is possible to use a year, a commonly known vehicle name (common name), a vehicle manufacturer's name, a grade, or the like. The expression for specifying a model of a vehicle without using the model code is, for example, an expression "ZZZ (common name) of YY year by AA company". Identifying a vehicle model is to specify a vehicle model from a vehicle image which is an image of a vehicle captured.

As shown in FIG. 1, a hardware configuration for realizing vehicle model identification system 1 according to the present disclosure includes imaging device 2, display device 3, vehicle model identification device 4, and bus 5 that connects therebetween. Vehicle model identification device 4 includes input device 6, storage device 7, and processor 8.

Imaging device 2 is a CCD camera or the like for capturing an image. Imaging device 2 is mainly placed on a road so as to grasp traffic conditions and crack down speeding vehicles. Imaging device 2 captures an image of a traveling vehicle from substantially the front (substantially forward). Imaging device 2 may be installed in the vicinity of a parking lot or an entrance gate of a facility. The vehicle image which is the image of the vehicle captured by imaging device 2 is registered in the vehicle image DB of storage device 7. The form, function, arrangement, quantity, and the like of imaging device 2 are not particularly limited as long as it is possible to image vehicle from substantially the front side, and various changes are possible.

Display device 3 is a monitor (display) or the like. Display device 3 has a list and a display screen displaying the vehicle image based on a search result. Display device 3 may be a touch panel for the user to operate the display screen with a finger or the like.

Input device 6 of vehicle model identification device 4 is, for example, an operation unit to operate vehicle model identification device 4 with an input device such as a keyboard or a mouse. Input device 6 is used for the user to input various instructions to vehicle model identification device 4 or to change or update information of the database (DB).

Storage device 7 of the vehicle model identification device 4 is, for example, a RAM, a ROM, a hard disk, or the like. Storage device 7 stores various programs and various data for realizing each function of vehicle model identification system 1 and a vehicle basic DB, a vehicle image DB, a score DB, and the like which are used for vehicle model identification processing and which will be described later.

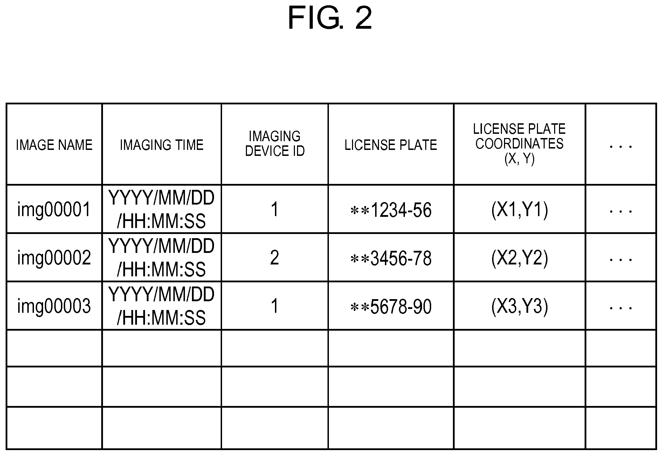

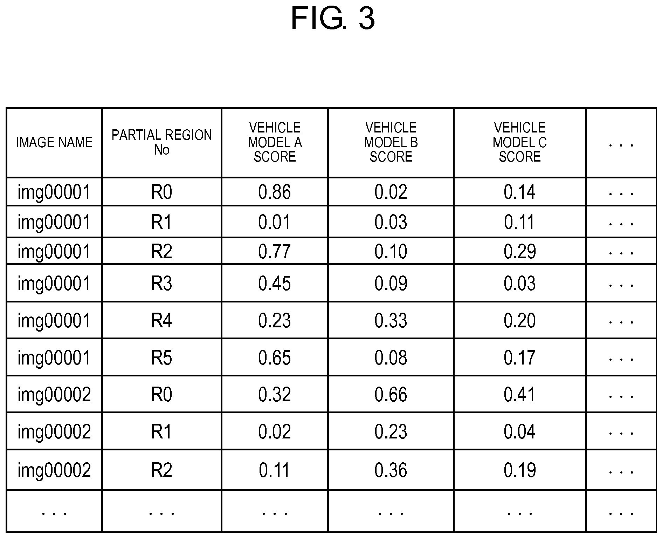

A list of the vehicle image DB and the score DB stored in storage device 7 will be described with reference to FIGS. 2 and 3.

FIG. 2 shows an example of the vehicle image DB stored in storage device 7. In the vehicle image DB, "image name" which is the number of the vehicle image captured by imaging device 2 and serving as a key of the database, "imaging time" of the year, month, day, and time captured by imaging device 2 corresponding to the "image name", and "imaging device ID" which is the number of imaging device 2 assigned to each imaging device 2 that captured each vehicle image are registered. In addition, "license plate" of the vehicle captured as vehicle information and "license plate coordinates (X, Y)" for extracting a front image and specifying partial region R, and the like are also registered.

FIG. 3 shows an example of the score DB stored in storage device 7. In the score DB, "image name" corresponding to the vehicle image DB and "partial region No." of each partial region R are automatically generated. In the score DB, a score for each vehicle model is defined in each partial region R. The score is a value indicating the probability that the partial region is a partial region of a specific vehicle model. The score is calculated by applying the feature amount automatically calculated in each partial region R to the score calculation model defined for each partial region R of each vehicle model in advance and registered in the vehicle basic DB. An example of the feature amount automatically calculated is, for example, HOG (Histograms of Oriented Gradients) feature amount or dense SIFT (Scale-Invariant Feature Transform) feature amount.

In the present embodiment, "vehicle model A score", "vehicle model B score", "vehicle model C score", and the like are calculated for each partial region R of each vehicle image as an example (the vehicle model A score is a value indicating the probability that the partial region is a partial region of model A vehicle).

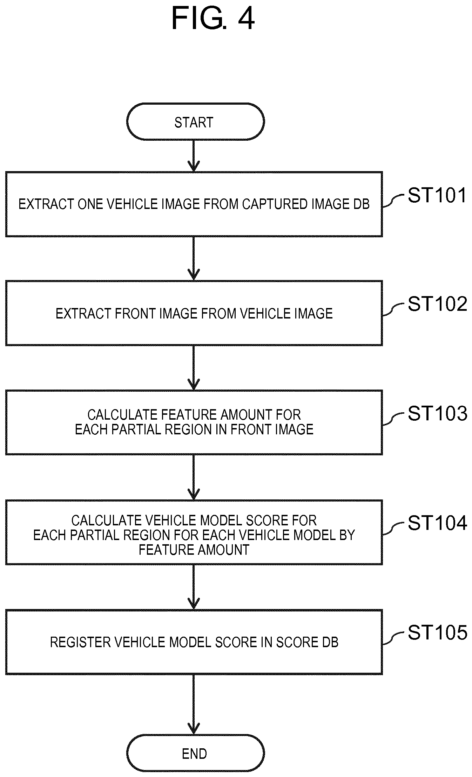

FIG. 4 is a flowchart showing an example of creating a score DB. The procedure of creating the score DB will be described with reference to FIG. 4.

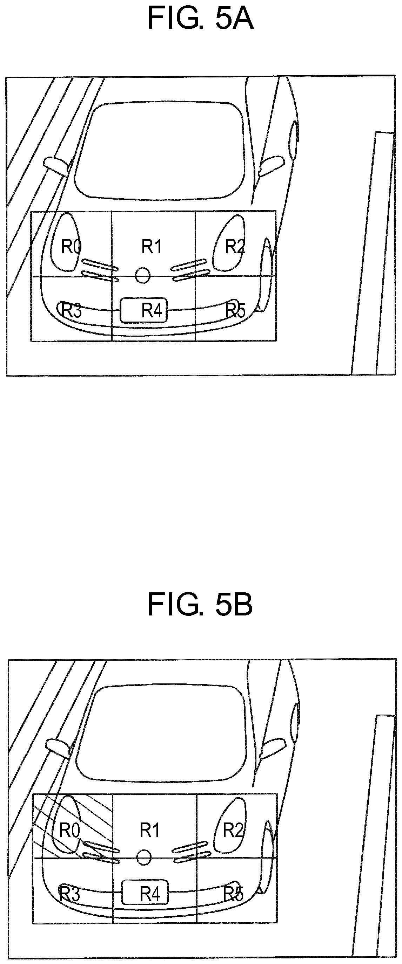

Processor 8 extracts one vehicle image from storage device 7 based on the image name described in the vehicle image DB stored in storage device 7 (ST101). Next, processor 8 extracts the front image based on a license plate position (for example, X1, Y1) registered in the vehicle image DB, from the vehicle image (for example, img00001) (ST102) to set partial region R in the vehicle image by dividing the extracted front image. In the present embodiment, as shown in FIG. 5A, the front image is divided into six partial regions R (see FIG. 5A, R0 to R5). All partial regions R are specified in the front image of the vehicle image and are regions including the left and right outer side and the left and right headlamps of the vehicle around a number plate as the center. Then, processor 8 calculates the feature amount for each partial region R in the front image, for example, by using dense SIFT (Scale-Invariant Feature Transform) (ST103).

Next, processor 8 calculates a score by applying the calculated feature amount for each partial region R to the score calculation model defined for each partial region R of each vehicle model in advance and registered in the vehicle basic DB (ST104).

Then, processor 8 registers the calculated score (for example, 0.86) as the score of model A of partial region R0 of image img00001 and sequentially registers the score value calculated for each image and for each partial region in the score DB stored in storage device 7 as a vehicle model score (ST105).

Processor 8 of vehicle model identification device 4 is a CPU or the like, reads various programs from storage device 7, acquires search condition, extracts a vehicle image list, performs the calculation of the feature amount and the data processing in partial region R of the vehicle, and controls entire vehicle model identification system 1.

### <Operation>

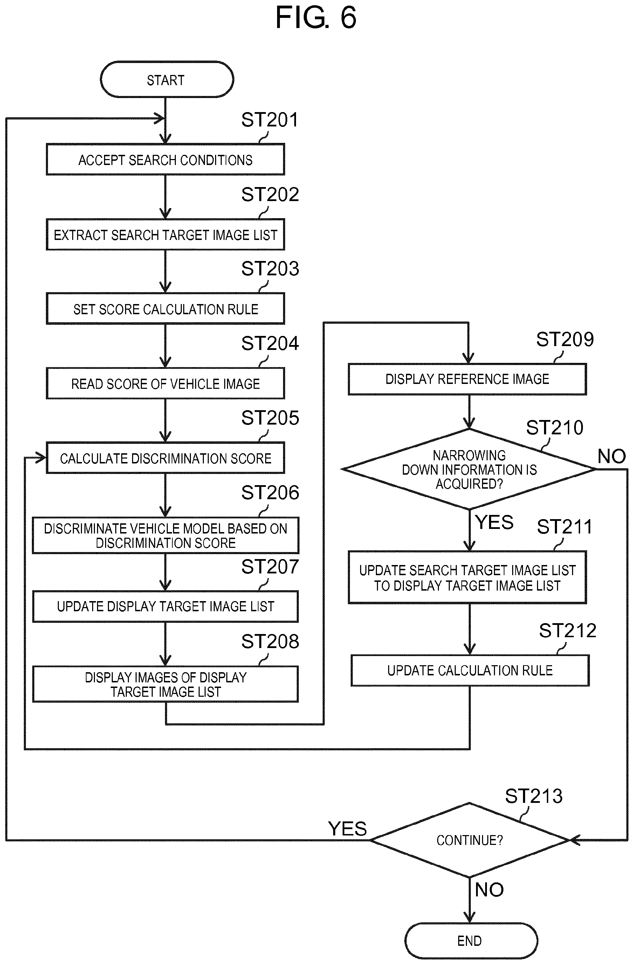

A specific operation of vehicle model identification device 4 of the present disclosure will be described with reference to FIGS. 6 to 10C. In the following description, the specific operation of vehicle model identification device 4 will be described together with the flow of the user searching for a specific vehicle image from the vehicle images captured in advance.

FIG. 6 is a flowchart showing an example of searching for a vehicle model.

The user inputs search condition into input device 6. The search condition is, for example, a vehicle model, an imaging device ID, a range of imaging time, and the like. The search condition may be referred to as information for specifying a target vehicle image. For example, in a case where the user wants to search for a vehicle image that is "an image obtained by capturing a model of a vehicle named AAA and captured by the imaging device in the vicinity of an A intersection around the time of o month, o day, o hour", such conditions may be represented by using inputs of search condition. In the present embodiment, the search condition includes at least a vehicle model. A part of the search condition may be a wild card. Processor 8 acquires the search condition (ST201).

Processor 8 extracts a search target image list based on the search condition (ST202). The search target image list is a list obtained as a result of narrowing down the vehicle images recorded in storage device 7 based on the search condition. The narrowing down here is performed based on formal conditions such as the imaging device ID and the range of the imaging time among the search condition.

Processor 8 sets a score calculation rule which is a rule composed of partial region R and the weight of each partial region (R0, R1,...) (ST203). The calculation rule set in ST203 is a rule (first rule) used for primary narrowing down based on a vehicle model in the search condition. It is desirable that the first rule is a universal rule. For example, the first rule may be a rule that equally weights all partial regions R. If the rule that equally weights all partial regions R is expressed, a score is (R0+R2+R3+R4+R5)/6).

Next, processor 8 reads the score of the vehicle image in the search target image list from the score DB (ST204).

Processor 8 calculates a discrimination score according to the score of the vehicle image read in ST204 and the calculation rule (ST205). The discrimination score is a score calculated by applying the score of the vehicle image to the calculation rule. In ST 205, discrimination scores are calculated for each vehicle image for all the models of vehicles that may be the search condition. In the present embodiment, since the first rule is a rule of equally weighting all partial regions R, the discrimination score for the model "A" of img00001 is the value obtained by dividing (0.86+0.01+0.77+0.45+0.23+0.65) by 6.

Then, processor 8 performs vehicle model discrimination, i.e., discriminating, based on the discrimination score, which vehicle model image the vehicle image is (ST206). Various rules are conceivable for allowing processor 8 to discriminate, based on the discrimination score, which vehicle model image the vehicle image is. For example, processor 8 may discriminate that the vehicle image, whose discrimination score is highest for the model "A", is the image of model A vehicle. In addition, processor 8 may discriminate that the vehicle image, whose discrimination score for the model "A" exceeds a predetermined value, is the image of model A vehicle. If all of the discrimination scores calculated for the vehicle image are less than the predetermined value, processor 8 may discriminate that the vehicle image is not an image of any model of vehicle.

Next, processor 8 updates the display target image list based on the result of vehicle model discrimination (ST207). Processor 8 adds the vehicle image to the display target image list if the vehicle model discriminated for the vehicle image is the search target vehicle model. The display target image list is a list made up of information including the information that exists in the vehicle image DB such as the date and time when a vehicle image is captured, an ID of the imaging device that captured the vehicle image, and the like.

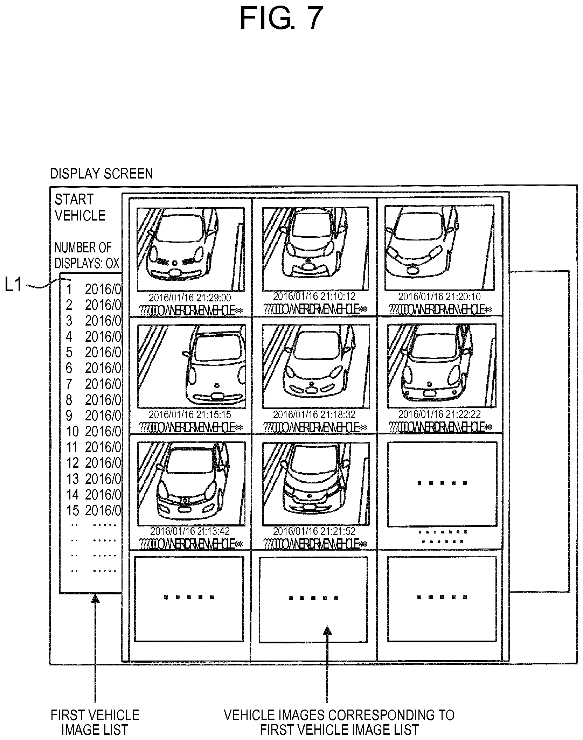

Then, processor 8 displays the display target image list and a plurality of vehicle images corresponding to the display target image list on the display device 3 (ST208) (see FIG. 7). In the present embodiment, first vehicle image list L1 is displayed on display device 3 as an example of the display target image list. In the present embodiment, a plurality of vehicle images corresponding to first vehicle image list L1 are displayed on display device 3 as an example of a plurality of vehicle images corresponding to the display target image list.

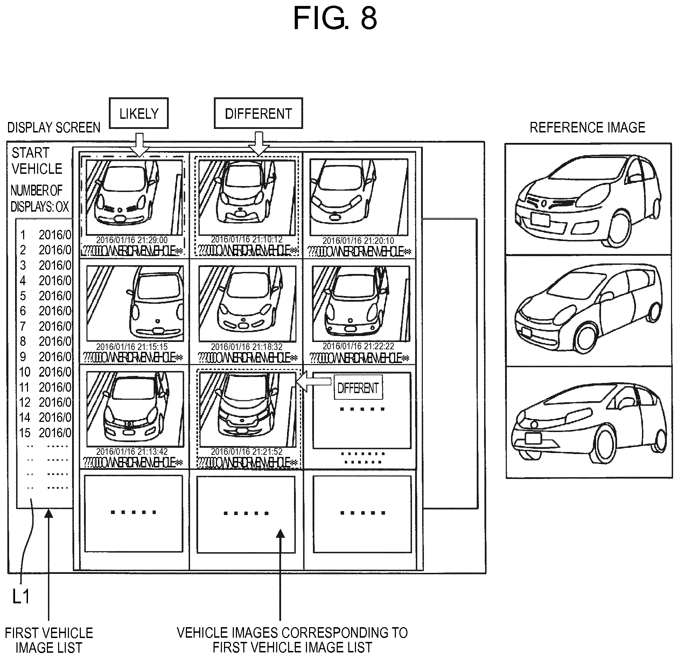

Further, processor 8 displays a reference image (for example, catalog image: see FIG. 8) of the search target vehicle model (ST209). It is possible for the user to determine that the vehicle image that the user feels a difference clearly from a reference image among the vehicle images displayed in ST208 is "different from the target vehicle model", by comparing the reference image with a plurality of vehicle images corresponding to first vehicle image list L1. In addition, it is possible for the user to determine that the vehicle image that the user feels close to the reference image is "likely to be the target vehicle model". The reference image functions as a guideline for selecting a target vehicle model. There may be cases where the user (operator) does not notice a difference in a detailed vehicle model depending on his or her skill, but since even beginners may easily search for a target vehicle model, the user may more efficiently perform a search by displaying the reference image. In a case where the skill of the user is good, it is possible to determine a target vehicle model without referring to the reference image, and therefore it is also possible not to display the reference image on display device 3.

As described above, the user who views the plurality of displayed vehicle images may recognize that the displayed plurality of vehicle images include both vehicle images including a vehicle likely to be the target vehicle model and vehicle images including a vehicle different from the target vehicle model. Next, the user performs the following operation in order to increase the proportion of the vehicle images including the vehicle likely to be the target vehicle model in the plurality of displayed vehicle images.

First, the user recognizes at which point in the vehicle image the difference between the vehicle image including a vehicle likely to be the target vehicle model and a vehicle image including a vehicle different from the target vehicle model appears. For example, it is assumed that the user feels "the vehicle images including a vehicle different from the target vehicle model include a large number of vehicle images whose shape of the headlamp is different from that of the target vehicle model". In other words, the user recognizes that the difference between the vehicle image including the target vehicle model and the vehicle image including the vehicle different from the target vehicle model appears in the position of the headlamp.

Next, the user designates the vicinity of the headlamp as specific partial region R0 by using input device 6 from a plurality of partial regions R (see FIG. 5A) previously divided in the vehicle image including the vehicle likely to be the target vehicle model (see the hatched portion in FIG. 5B). The designation is performed by clicking a part of the vehicle image or the like. In addition, the designation may be performed by any way that specifies a partial region. For example, a part of the image other than the vehicle image may be designated. In addition, a part of the image may be designated by specifying a partial region by character input by keyboard operation, voice operation or the like. In addition, there is no need to clearly indicate to the user that the vehicle image is divided, but as shown in FIG. 5B, in the case where the divided regions are explicitly indicated by using a grid, the usability for the user is improved.

Processor 8 acquires designation by the user as narrowing-down information for specifying at least a partial region R of the vehicle image (YES in ST210).

In addition, processor 8 updates the search target image list (first vehicle image list L1) to the display target image list (ST211). As a result, the population to be searched in the later processing is narrowed down than the search target image list which is the population extracted in the most recent ST202. In the present disclosure, updating the search target image list to the display target image list is not indispensable. When the search target image list is updated to the display target image list as in the present embodiment, since the display result may be filtered in two stages, there is an advantage that it is possible to reduce the number of display cases. However, based on a second rule defined as will be described later, even if the vehicle model discrimination is performed on the same population (or other population) as the first rule, there is an advantage that it is possible to obtain a discrimination result with higher accuracy than the first rule.

Then, processor 8 updates the score calculation rule as the second rule based on the narrowing-down information (ST212). Various methods may be used for defining the second rule based on the narrowing-down information. For example, (1) it is possible to set only specific partial region R where the part designated by the narrowing-down information exists as partial region R to be used in the second rule (calculation rule). This means that the second rule is obtained by changing the first rule in such a manner that the weight of specific partial region R is set to 1 and the other partial regions are set to 0. In addition, (2) it is conceivable that the weight of specific partial region R is increased than the other partial regions (for example, the weight of specific partial region R0 is 0.5, the weights of the other partial regions R1, R2... are 0.1, or the weight of specific partial region R0 is 1, and the weights of the other partial regions R1, R2... are 0). Besides that, it is also conceivable to increase the weight of the score of specific partial region R as compared with the first rule.

The first rule set in ST203 is a rule for calculating a score universally obtained irrespective of the location of the partial region. On the other hand, the second rule set in ST212 is a rule for calculating a score by giving bias to the score of the specific partial region R.

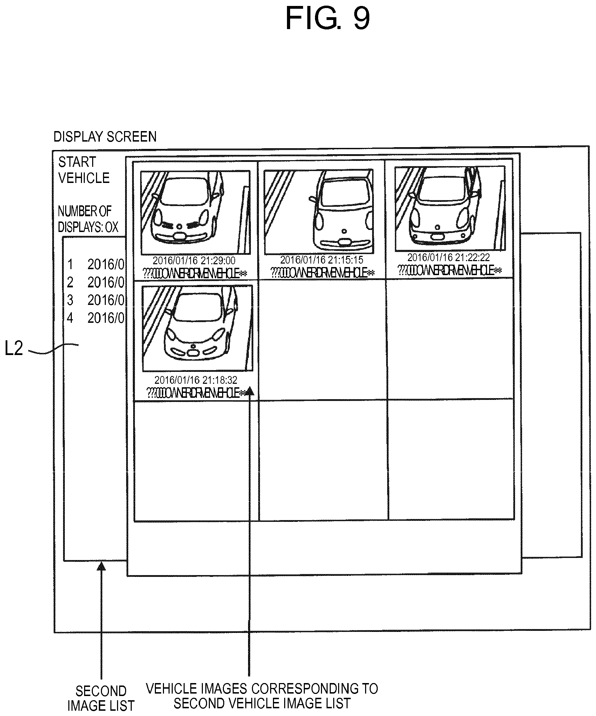

Processor 8 generates the second rule to calculate the discrimination score of ST205, performs vehicle model discrimination with the discrimination score based on the second rule (ST206), and displays second vehicle image list L2 and the vehicle image corresponding to L2 in the second vehicle image list on display device 3 (ST208) (see FIG. 9). With reference to the display result, the user may specify the vehicle image in which the target vehicle model is captured and discover the target vehicle model early.

In ST 210, in a case where the narrowing-down information may not be acquired (NO in ST210), the program proceeds to ST213, in a case where the user continues another search (for example, another imaging device 2 of the same vehicle model, imaging time, another vehicle model, and the like) (YES in ST213), the program returns to accepting search condition of ST201, and in the case of search termination (NO in ST213), the program ends.

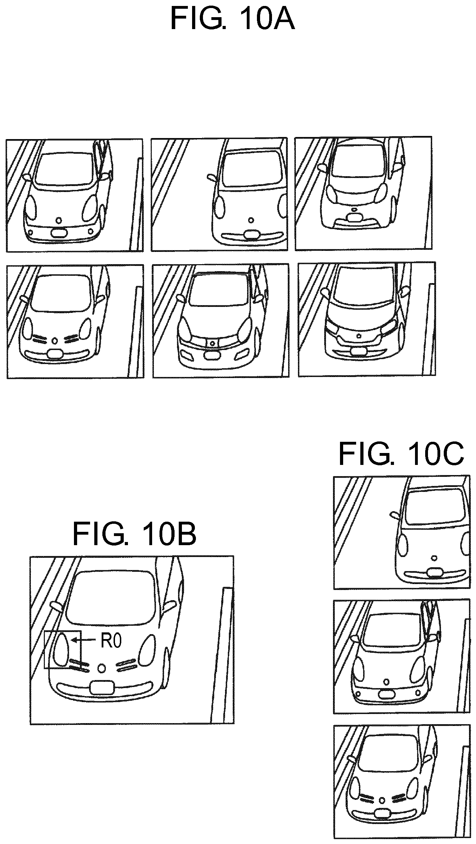

An outline of the above-described narrowing-down procedure is shown in FIGS. 10A, 10B, and 10C. FIG. 10A is the same as FIG. 7 and is displayed as a vehicle image corresponding to the user's first vehicle image list L1. FIG. 10B shows that a specific partial region (for example, R0) is designated by the user corresponding to FIG. 5B and narrowing-down search is further performed.

FIG. 10C is a display of narrowing-down search result corresponding to FIG. 9, and the vehicle images are narrowed down. In a case where it is determined that the number of vehicle images searched for in the narrowing-down search result is large, it is also possible to designate another specific partial region (for example, R2) and perform narrow-down search again.

As described above, vehicle model identification device 4 of the present embodiment is a device for identifying a model of a vehicle based on a vehicle image of the vehicle captured by imaging device 2, and the vehicle model identification device 4 includes processor 8 and storage device 7, in which storage device 7 records a vehicle image which is an image of a vehicle captured and a score indicating a probability that the vehicle in the vehicle image is a specific vehicle model and processor 8 acquires search condition which is information for specifying a vehicle model, extracts first vehicle image list L1 that matches the search condition by using a first rule based on the search condition and the score, displays first vehicle image list L1 on display device 3, acquires partial specification information that specifies at least a part of the vehicle image, generates a second rule based on the partial specification information, and extracts second vehicle image list L2 that matches the search condition by using the generated second rule based on the search condition and the score.

As a result, it is possible to improve search efficiency by narrowing down the search based on the second rule by the partial specification information, thereby discovering the target vehicle early.

As described above, in vehicle model identification device 4 of the present embodiment, the score is defined in each of the plurality of partial regions R in the vehicle image, and the second rule is a rule of increasing a weight of the score of at least one partial region (for example, R0) as compared with the first rule. As a result, it is possible to narrow down the search by partial region R which is a feature of a vehicle model and to narrow down more precisely.

As described above, vehicle model identification device 4 of the present embodiment uses the score of at least one partial region only in the second rule. As a result, it is possible to easily compare by partial region R which is a feature of a vehicle model and search efficiently.

As described above, in vehicle model identification device 4 of the present embodiment, the first rule is a rule of using a score obtained by equally weighting all partial regions R of the front image in the vehicle image, and the second rule is a rule of increasing the weight of the score of at least one partial region R included in the front image as compared with the weight of the score of the other partial regions R included in the front image. As a result, it is possible to narrow down the search by the partial region R which is a feature of the vehicle model and to discover the target vehicle model early.

As described above, in the vehicle model identification device 4 of the present embodiment, the score is calculated based on the feature amount of each partial region R. As a result, it is possible to obtain a difference in the score in each partial region R and to narrow down the partial region R easily.

As described above, in vehicle model identification device 4 of the present embodiment, the feature amount is a numerical value calculated by dense SIFT (Scale-Invariant Feature Transform). As a result, it is easy to calculate the feature amount.

As described above, in vehicle model identification device 4 of the present embodiment, processor 8 uses the second rule to narrow down first vehicle image list L1 to second vehicle image list L2 having a smaller number of vehicle images. As a result, it is possible to further narrow down the vehicle images to be searched and to discover the target vehicle model early.

As described above, in vehicle model identification device 4 of the present embodiment, processor 8 displays a reference image obtained by imaging a vehicle of the same model as the vehicle of the vehicle image matching the search condition on display device 3 together with first vehicle image list L1 or second vehicle image list L2. As a result, even those unfamiliar with the feature in the partial region R of the vehicle may easily discover the target vehicle mode and narrow down the vehicle images.

As described above, vehicle model identification system 1 of the present embodiment includes vehicle model identification device 4, imaging device 2 for imaging a vehicle, and display device 3 for displaying a vehicle image, first vehicle image list L1, and second vehicle image list L2. As a result, it is possible to build a system capable of accurately extracting a target vehicle by narrowing down to specific partial regions.

As described above, the vehicle model identification method of the present disclosure is a method for identifying a model of a vehicle based on a vehicle image of the vehicle captured by imaging device 2 including recording a vehicle image which is an image of a vehicle captured and a score indicating the probability that the vehicle in the vehicle image is a specific vehicle model, acquiring search condition that is information for specifying a vehicle model, extracting first vehicle image list L1 that matches the search condition by using a first rule based on the search condition and the score, displaying first vehicle image list L1 on display device 3, acquiring partial specification information that specifies at least a part of the vehicle image, generating a second rule based on the partial specification information, and extracting second vehicle image list L2 that matches the search condition by using the generated second rule based on the search condition and the score.

As a result, it is possible to reduce candidate vehicle images by narrowing down the search based on the second rule by the partial specification information, and therefore it is possible to improve search efficiency and discover the target vehicle early.

The embodiment of the vehicle model identification device, the vehicle model identification system, and the vehicle model identification method according to the present disclosure has been described above with reference to the drawings, but the present disclosure is not limited to this example. Within the category described in the claims, it will be apparent to those skilled in the art that various changed examples, modification examples, substitution examples, addition examples, deletion examples or equivalent examples may be conceived, and it should be understood that such examples naturally belong to the technical scope of the present disclosure.

### INDUSTRIAL APPLICABILITY

The vehicle model identification device, the vehicle model identification system, and the vehicle model identification method according to the present disclosure are useful for an application in which a target vehicle may be early discovered from among a large number of vehicle images.

### REFERENCE MARKS IN THE DRAWINGS

- 1: VEHICLE MODEL IDENTIFICATION SYSTEM
- 2: IMAGING DEVICE
- 3: DISPLAY DEVICE
- 4: VEHICLE MODEL IDENTIFICATION DEVICE
- 5: BUS
- 6: INPUT DEVICE
- 7: STORAGE DEVICE
- 8: PROCESSOR
- L1: FIRST VEHICLE IMAGE LIST
- L2: SECOND VEHICLE IMAGE LIST
- R: PARTIAL REGION

## Claims

1. A vehicle model identification device for identifying a model of a vehicle based on a vehicle image of the vehicle captured by an imaging device, the device comprising:
a processor; and
a storage device,
wherein the storage device records the vehicle image and a score indicating a probability that the vehicle in the vehicle image is a specific vehicle model, and
the processor
acquires search condition including information for specifying a vehicle model,
extracts a first vehicle image list that matches the search condition by using a first rule based on the search condition and the score,
displays the first vehicle image list on a display device, acquires partial specification information that specifies at least a part of the vehicle image,
generates a second rule based on the partial specification information, and
extracts a second vehicle image list that matches the search condition by using the generated second rule based on the search condition and the score.

2. The vehicle model identification device of Claim 1,
wherein the score is defined for each of a plurality of partial regions in the vehicle image, and
the second rule is a rule of increasing a weight of the score of at least one partial region as compared with the first rule.

3. The vehicle model identification device of Claim 2,
wherein the second rule uses the score of only the at least one partial region.

4. The vehicle model identification device of Claim 2,
wherein the first rule is a rule of using a score obtained by evenly weighting all partial regions of a front image in the vehicle image, and
the second rule is a rule of increasing the weight of the score of at least one partial region included in the front image as compared to the weights of the scores of the other partial regions included in the front image.

5. The vehicle model identification device of Claim 2,
wherein the score is calculated based on a feature amount of each partial region.

6. The vehicle model identification device of Claim 5,
wherein the feature amount is a numerical value calculated by dense SIFT (Scale-Invariant Feature Transform).

7. The vehicle model identification device of Claim 1,
wherein the processor uses the second rule to narrow down the first vehicle image list to the second vehicle image list having a smaller number of vehicle images.

8. The vehicle model identification device of Claim 1,
wherein the processor displays a reference image obtained by imaging a vehicle of the same model as the vehicle of the vehicle image matching the search condition on the display device together with the first vehicle image list or the second vehicle image list.

9. A vehicle model identification system comprising:
the vehicle model identification device of Claim 1;
the imaging device for imaging a vehicle; and
a display device that displays the vehicle image, the first vehicle image list, and the second vehicle image list;

10. A vehicle model identification method for identifying a model of a vehicle based on a vehicle image of the vehicle captured by an imaging device, the method comprising:
recording a vehicle image that is an image in which a vehicle is imaged and a score indicating the probability that the vehicle in the vehicle image is a specific vehicle model;
acquiring search condition that is information for specifying a vehicle model;
extracting a first vehicle image list that matches the search condition by using a first rule based on the search condition and the score;
displaying the first vehicle image list on a display device;
acquiring partial specification information that specifies at least a part of the vehicle image;
generating a second rule based on the partial specification information,
and
extracting a second vehicle image list that matches the search condition by using the generated second rule based on the search condition and the score.
